# EUROPEAN PATENT APPLICATION

(11) **EP 4 835 924 A1**
(43) Date of publication of application: **04.11.2026**
(21) Application number: 24912117.9
(22) Date of filing: 21.11.2024
(51) Int. Cl.: H01F 1/01, B22F 1/00, B22F 1/05, B22F 1/17, C22C 38/00, C25D 7/00, C25D 17/18

(54) **METHOD FOR MANUFACTURING MAGNETIC REFRIGERATION MATERIAL**

(30) Priority: 25.12.2023 JP 2023217893
(71) Applicant: SHIN-ETSU CHEMICAL CO., LTD., Tokyo 100-0005 (JP)
(72) Inventor: SUGAHARA, Hiroto, Echizen-shi, Fukui 915-8515 (JP); KUME, Tetsuya, Echizen-shi, Fukui 915-8515 (JP)
(74) Representative: Vossius & Partner Patentanwälte Rechtsanwälte mbB
(86) International application number: PCT/JP2024/041288
(87) International publication number: WO 2025/142224

(57) **Abstract**

The method for producing a magnetic refrigeration material of the present invention is characterized by including subjecting a powder of a magnetic refrigeration material containing a powder having a particle size of 150 µm or more and 500 µm or less to Cu electroplating in a plating liquid having a liquid temperature of 30°C or lower. According to the present invention, A method for producing a magnetic refrigeration material, which is capable of producing a magnetic refrigeration material that hardly undergoes deterioration in characteristics and has high corrosion resistance in a productive manner can be provided.

## Description

### Technical Field

The present invention relates to a method for manufacturing magnetic refrigeration material that hardly undergoes deterioration in characteristics and has high corrosion resistance.

### Background Art

Since fluorocarbons are ozone-depleting substances and are also global warming gas, a novel refrigeration air conditioning system that uses no fluorocarbon attracts attentions for environmental conservation. Although development of an alternative refrigerant to fluorocarbons is actively carried on, no novel refrigerant that achieves satisfactory performance, cost, and safety has yet been in practical use.

On the other hand, a magnetic refrigeration system that, unlike conventional refrigeration air conditioning systems, utilizes change in entropy associated with an increase in the magnetic field (magnetocaloric effect, ΔS) draws attention. Examples of materials having a large absolute value of ΔS include Mn(As₁₋ₓSbₓ) (PTL 1) and La(Fe₁₋ₓSiₓ)₁₃H_{z} (PTL 2). In particular, the former has a very large ΔS of -30 J/kgK and thus, can be a superior magnetic refrigeration material. However, since As which is a component of Mn(As₁₋ₓSbₓ) has toxicity, this material is substantially difficult to apply. Since La(Fe₁₋ₓSiₓ)₁₃H_{z} has ΔS of -25 J/kgK which is the largest next to that of Mn(As₁₋ₓSbₓ), and the constitutional elements thereof do not have toxicity and are not rare metals, La(Fe₁₋ₓSiₓ)₁₃H_{z} is the most promising substance. In addition, the change in ΔS is limited to around the magnetic transition temperature (T_{c}) of the substance that shows a magnetocaloric effect, and a single material can act only at a point of temperature, and hence, cannot produce a refrigeration system which is to make a substantially wide range of difference in temperature. Thus, a method in which a part of components is replaced with another element for changing the operation temperature is adopted.

These substances are required to act around room temperature (approximately -70 to +70°C). However, unlike a conventional magnetic refrigeration which has been used as a means for producing a cryogenic temperature which has been difficult to produce in gas refrigeration, lattice vibration cannot be ignored in the magnetic refrigeration in the aforementioned operation temperature, and hence, there has been a problem of reduction in the magnetocaloric effect. This problem can be solved by utilizing the lattice vibration as a thermal storage effect. Then, an active magnetic regenerative (AMR) cycle in which the lattice vibration is used as a thermal storage effect has been developed, and thus, a refrigeration air conditioning system at around room temperature that utilizes the magnetocaloric effect has become realistic.

In the AMR cycle, a magnetic refrigeration material is filled in a state where there are gaps in which a thermal medium, such as water, can path through (referred to as bed portion). The thermal medium can move to the high temperature end and the low temperature end through the gaps. A magnetic field is applied to the bed portion by a permanent magnet or the like in a state where a thermal medium is present on the side of the low temperature end, to decrease the entropy of the magnetic refrigeration material, thereby increasing the temperature of the magnetic refrigeration material. The thermal medium is moved from the low temperature end side to the high temperature end side. In this time, the thermal medium receives heat from the magnetic refrigeration material, moves to the high temperature end side, and discharges the heat at the high temperature end using a heat exchanger. Subsequently, the magnetic field of the permanent magnet is removed, and the entropy of the magnetic refrigeration material increases and the temperature decreases. The thermal medium is moved from the high temperature end side to the low temperature end side. At this time, the thermal medium is cooled by the magnetic refrigeration material. The cooled thermal medium absorbs heat through the heat exchanger. Repetition of this cycle generates a difference in temperature between the high temperature end and the low temperature end, thus making a refrigeration cycle.

La(Fe₁₋ₓSiₓ)₁₃H_{z} described above is obtained by introducing hydrogen in the crystal lattice of La(Fe₁₋ₓSiₓ)₁₃. In an AMR cycle, a magnetic refrigeration material continues to be in contact in the state where a medium, such as water, flows. Thus, in the case where La(Fe₁₋ₓSiₓ)₁₃H_{z} is used as a magnetic refrigeration material, if powder of a magnetic refrigeration material is filled as it is, denaturation due to corrosion occurs owing also to its large specific surface area, and accordingly, the powder of the magnetic refrigeration material is refined. Then, clogging caused by refining of the magnetic refrigeration material and reduction in the magnetocaloric effect of the magnetic refrigeration material due to corrosion have been great problems in practice. In addition, since hydrogen entering the inside of the lattice is discharged in vacuum at 500°C or higher, it is difficult to calcine the powder of the hydrogenated La(Fe₁₋ₓSiₓ)₁₃H_{z} for producing a bulk body which is advantageous for heat exchange of La(Fe₁₋ₓSiₓ)₁₃H_{z}. Regarding this problem, PTL 3 describes a method for producing a bulk body having appropriate gaps while preventing desorption of hydrogen.

NPL 1 reports application of electroless Cu plating on an La(Fe,Si)-based alloy in order to address reduction in the thermal conductivity in producing a porous bulk body.

### Citation List

### Patent Literature

[PTL 1]JP 2003-28532 A
[PTL 2]JP 2006-89839 A
[PTL 3]JP 2005-120391 A

### Non Patent Literature

[NPL 1]Julia Lyubina, Ullrich Hannemann, Lesley F. Cohen, and Mary P. Ryan, "Novel La(Fe,Si)13/Cu Composites for Magnetic Cooling", Adv. Energy Mater. 2012, 2, 1323-1327.

### Summary of Invention

### Technical Problem

In PTL 3, Sn or Sn alloy-based metal coating is applied around magnetic particles, and then, a heat treatment is applied at 100°C to 300°C in an inert gas atmosphere, thereby binding the magnetic particles to each other to produce a bulk body having a prescribed porosity. However, since the binding of the magnetic particles is achieved by solder joint with a metal coating containing Sn, there is a concern about poor thermal conductivity in the bulk body, and when the metal coating is to be multilayered coating, there is also a concern about the productivity of the bulk body.

The electroless Cu plating, which is applied on an La(Fe,Si)-based alloy powder in NPL 1, is a plating which is usually applied on a powder that is difficult to electrify. However, electroless plating is considerably disadvantageous in terms of the cost and productivity, and thus, is not always an effective method.

The present invention has been made in view of the above circumstances, and has an object to provide a method that can produce, in a productive manner, a magnetic refrigeration material that hardly undergoes deterioration in characteristics and has high corrosion resistance.

### Solution to Problem

As a result of intensive studies to solve the above problems, the present inventors have found that, by subjecting a magnetic refrigeration material having a prescribed size to electroplating under a prescribed temperature condition, a magnetic refrigeration material that hardly undergoes deterioration in characteristics between before and after plating and has high corrosion resistance can be produced in a productive manner, thereby completing the present invention.

Accordingly, the present invention provides a method for producing a magnetic refrigeration material as follows.
1. A method for producing a magnetic refrigeration material, the method including subjecting a powder of a magnetic refrigeration material containing a powder having a particle size of 150 µm or more and 500 µm or less to Cu electroplating in a plating liquid having a liquid temperature of 30°C or lower.
2. The method for producing a magnetic refrigeration material according to 1, in which the magnetic refrigeration material is constituted of a compound represented by a general formula: La(Fe₁₋ₓSiₓ)₁₃H_{z} (0.05≤x≤0.2, 0.3≤z≤3).
3. The method for producing a magnetic refrigeration material according to 1 or 2, in which the plating liquid is a basic plating liquid.
4. The method for producing a magnetic refrigeration material according to 3, in which the plating liquid is a copper pyrophosphate plating liquid.
5. The method for producing a magnetic refrigeration material according to 1 or 2, in which an inclined barrel is immersed in the plating liquid and the powder of the magnetic refrigeration material is subjected to Cu electroplating in the inclined barrel.
6. The method for producing a magnetic refrigeration material according to 5, in which the inclined barrel is a hole-free barrel having no aperture.
7. The method for producing a magnetic refrigeration material according to 1 or 2, in which the powder of the magnetic refrigeration material is subjected to Cu electroplating together with media.

### Advantageous Effects of Invention

According to the present invention, it is possible to produce a magnetic refrigeration material that hardly undergoes deterioration in characteristics and has high corrosion resistance in a productive manner.

### Brief Description of Drawings

Fig. 1 is an image of a powder of a Cu-electroplated magnetic refrigeration material obtained in Example 1.
Fig. 2 is an image of a powder of a Cu-electroplated magnetic refrigeration material obtained in Comparative example 3.

### Description of Embodiments

The method for producing a magnetic refrigeration material of the present invention includes subjecting a powder of a magnetic refrigeration material having a particle size of 150 µm or more and 500 µm or less to Cu electroplating under a condition of a liquid temperature of a plating liquid of 30°C or lower.

As a plating treatment to a powder, such as a magnetic refrigeration material, in general, electroless plating which is plating by a chemical substitution action and need not take into account the problem of electrifying the powder is used in many cases. However, the cost of a plating liquid of electroless plating is relatively high since the plating liquid has to be disposed and updated after use of a certain number of times. In addition, since a plating tank, pipes, and jigs are also plated, which results in a large loss, and a step of detaching them takes time, there is a large disadvantage in terms of the productivity. Thus, in the present invention, electroplating is applied in which a plating liquid can be used continuously, liquid management is easy, and plating can be achieved in a short time.

In electroplating, an appropriate metal element can be used from the viewpoints of high thermal conductivity and cost, but Cu is used in the present invention. Use of Cu imparts corrosion resistance, and at the same time, achieves a less deterioration in characteristics and is also advantageous in terms of the cost, and thus, is an important factor for achieving a good productivity in the present invention. The metal element for electroplating need not be a single metal element only of Cu, and, for example, electroplating can be achieved by combining Cu with a metal other than Cu, such as Ni or Ag. From the viewpoint of the productivity, a single layer plating is preferred than a multilayer plating. The thickness of the plating film is not particularly limited and can be appropriately set. However, when the plating is too thick, the volume ratio of the magnetic refrigeration material relative to the powder is relatively lowered. Thus, the thickness of plating is preferably 5 µm or less, and more preferably 4 µm or less. On the other hand, when the plating is too thin, corrosion resistance is affected, and thus, the thickness is generally preferably 3 µm or more.

In the method for producing a magnetic refrigeration material of the present invention, a powder of a magnetic refrigeration material containing a powder having a particle size of 150 µm or more and 500 µm or less is used. When a powder having a particle size of 150 µm or more is subjected to electroplating, dissolution of the powder of the magnetic refrigeration material in the plating liquid which leads to deterioration in characteristics can be suppressed. When the components of the magnetic refrigeration material are dissolved in the plating liquid, a precipitation is liable to be produced in a plating tank to affect liquid circulation due to clogging of filter and the like, and in addition to that, it is difficult to remove, for example, ionized Fe element from the plating liquid, making it necessary to regularly exchange the plating liquid, resulting in an increase in the cost. On the other hand, in the case of a powder having a particle size of 500 µm or less, a phenomenon that the powder particles are not completely crushed to often leave cracks, which leads to a significant deterioration in the corrosion resistance, can be suppress . The powder of the magnetic refrigeration material preferably contains a powder having a particle size of 200 µm or more and 450 µm or less, and more preferably contains a powder having a particle size of 250 µm or more and 400 µm or less. The particle size can be measured by a sieving method, and a value selected by sieving with sieves for various particle sizes can be adopted.

The powder of the magnetic refrigeration material may contain a powder of the magnetic refrigeration material having a particle size of less than 150 µm or more than 500 µm. However, when a powder having a particle size of less than 150 µm is subjected to electroplating, the powder of the magnetic refrigeration material is possibly dissolved in the plating liquid. When the particle size is more than 500 µm, the powder particles are not completely crushed to often leave cracks, which possibly leads to a significantly deterioration in the corrosion resistance. Thus, a higher percentage of the powder of the magnetic refrigeration material having a particle size of 150 µm or more and 500 µm or less in the powder of the magnetic refrigeration material is more preferred. The percentage of the powder of the magnetic refrigeration material having a particle size of 150 µm or more and 500 µm or less in the powder of the magnetic refrigeration material is preferably 80% by mass or more and 100% by mass or less, more preferably 90% by mass or more and 100% by mass or less, further preferably 95% by mass or more and 100% by mass or less, furthermore preferably 99% by mass or more and 100% by mass or less, and furthermore preferably 100% by mass.

In the method for producing a magnetic refrigeration material of the present invention, the temperature of a plating liquid in electroplating is to be 30°C or lower. The following has been found: in general, Cu electroplating is performed at a liquid temperature of 50 to 60°C, but in the case of a magnetic refrigeration material, in particular, such a hydrogenated product as represented by the general formula: La(Fe₁₋ₓSiₓ)₁₃H_{z}, hydrogen is gradually desorbed even at such a temperature and T_{c} shifts from a target temperature. In the case of a temperature higher than 30°C, a lot of plating defects, such as roughness of the surface and deposit missing parts, occur and the corrosion resistance is significantly deteriorated. Furthermore, since the powder of the magnetic refrigeration material is liable to be dissolved in the plating liquid, characteristics deteriorate, a precipitation occurs, and exchange of the plating liquid is needed, and thus, such a temperature is not preferred. The liquid temperature of the plating liquid is preferably 15°C or higher and 25°C or lower. The method for managing the liquid temperature is not particularly limited, and the liquid temperature may be appropriately managed and adjusted by a generally adopted method.

The other conditions of the Cu electroplating can be appropriately adjusted so as to give a desired plating thickness. The voltage in plating is not particularly limited, but from the viewpoint of increasing corrosion resistance, the voltage is preferably 3V or more, and more preferably 10V or more. The plating time may be set in view of the balance with the applied voltage, and, for example, can be 60 minutes or more.

The magnetic refrigeration material subjected to electroplating in the present invention is not particularly limited, but is preferably constituted of a compound represented by the general formula: La(Fe₁₋ₓSiₓ)₁₃H_{z} (0.05≤x≤0.2, 0.3≤z≤3, preferably 0.08≤x≤0.14, 1.2≤z≤1.6). The compound represented by La(Fe₁₋ₓSiₓ)₁₃H_{z} has an NaZn₁₃₋type crystal structure. This is because it is possible in the present invention to reduce desorption of hydrogen from the magnetic refrigeration material to suppress deterioration in characteristics and also to increase the corrosion resistance. La in the above general formula can be substituted partially with a rare earth element, and specifically, the rare earth element is preferably one or more rare earth elements selected from Ce, Pr, and Nd. The substitution ratio is not particularly limited, and is preferably 0 atomic% or more and 50 atomic% or less of La, and more preferably 20 atomic% or more and 40 atomic% or less of La. A method in which a part of La is substituted with another rare earth element to change ΔS and the transition temperature is known, and in particular, by substituting a part of La with Ce, Pr, or Nd, superior characteristics can be achieved. Thus, it is desirable that an appropriate amount is substituted according to necessary magnetic characteristics. However, when the substitution ratio is high, deterioration in the magnetic characteristics including a decrease in ΔS occurs, and thus, the substitution ratio is preferably within the above range. Fe in the above general formula can be partially substituted with a transition metal element, and specifically, the transition metal element is one or more elements selected from Co, Mn, Ni, Nb, W, Ta, Cr, Cu, and Ag , and preferably contains Co and Mn. The substitution ratio is not particularly limited, but is preferably 0 atomic% or more and 0.03 atomic% or less of Fe, and more preferably 0.005 atomic% or more and 0.025 atomic% or less of Fe. With such added elements, the magnetic transition temperature of the magnetic refrigeration material can be suitably controlled.

The nature of the plating liquid described above is preferably basic. In particular, when the magnetic refrigeration material is constituted of a compound represented by the general formula: La(Fe₁₋ₓSiₓ)₁₃H_{z}, an acidic plating liquid often causes elution of an Fe component, and a basic plating liquid which exhibits low erosion to the magnetic refrigeration material is suitable . The plating liquid is not particularly limited, but is preferably a copper pyrophosphate plating liquid. A copper pyrophosphate plating liquid is a weakly basic complex salt bath, exhibits a low erosion to the object to be plated, is also superior in the even electrodeposition (throwing power) to such a material having a small particle diameter as applied in the present invention, and is superior in workability because of its low toxicity. In addition, the copper pyrophosphate plating liquid has advantages in that mechanical processing is easy since the surface after plating is smooth, thick deposition of plating to an Fe-containing material is suitably achieved, and the gloss is also good.

An apparatus used in electroplating in the present invention is not particularly limited, and an ordinary electroplating apparatus can be used. An example of a general configuration is a configuration including a plating tank, a filter, a heater for adjusting liquid temperature, an agitator, a rectifier, a barrel, an electrode, and the like. As a barrel, an inclined barrel is preferably used from the view point of achieving even electroplating on powder. In the present invention, since electroplating is applied on a powder having a small average particle diameter, not a generally used barrel with apertures, such as a mesh, but a barrel having no hole is used, making it possible to achieve good electroplating with reduced loss of the powder.

In the electroplating as described above, it is preferred that a powder of a magnetic refrigeration material and media are contained in a barrel to achieve electroplating. When electroplating is performed with media, as compared with a case of electroplating without media, the current is stabilized so that the powder is not attached to the electrode, making it possible to prevent scattering and aggregation, leading to obtaining plating with an even thickness. The material and size of the media used are not particularly limited and a commercially available media can be used. By using media in an amount of approximately 20% by volume to 40% by volume relative to the volume of the barrel, electroplating can be effectively achieved.

According to the method described above, a magnetic refrigeration material that hardly undergoes deterioration in characteristics and has good corrosion resistance can be produced in a productive manner, and a magnetic refrigeration material that can be suitably used in a magnetic refrigeration system, such as an AMR cycle, can be obtained.

### Examples

The present invention will be described below in more detail with reference to Examples and Comparative Examples, but the present invention is not to be limited to the following examples.

### [Example 1, Comparative Examples 1 to 3]

La metal, Si metal, and electrolytic iron were weighed so as to give a prescribed composition, were melted by heating in Ar gas atmosphere to 1500°C in a high frequency melting furnace, and were cooled by a strip cast method, thereby producing an alloy thin strip having an average film thickness of about 300 µm. This alloy thin strip was subjected to homogenization heat treatment and hydrogenation heat treatment under a predetermined conditions to obtain a powder of a magnetic refrigeration material represented by La(Fe₁₋ₓSiₓ)₁₃H_{z} (x=0.11, z=1.5). The obtained powder was classified by a sieving method to attain a particle size shown in Table 1. The composition of a magnetic refrigeration material was analyzed using a high resolution ICP optical emission spectrometer (manufactured by Hitachi High-Tech Corporation, tradename "SPS3500DD").

First, on a powder of a magnetic refrigeration material, change in T_{c} by a heat treatment was measured in advance. The change in T_{c} was determined as follows: the m-T characteristics were measured using a VSM unit of a compact refrigerant-free physical properties measurement apparatus (manufactured by Quantum Design, tradename "VersaLab"), and the obtained m-T characteristics were subjected to temperature differentiation to obtain the dm/dT-T characteristics, and the temperature at a peak thereof was taken as Tₚₑₐₖ. As a result, it became apparent that, when the heat treatment temperature is 50°C or higher, Tₚₑₐₖ gradually decreases, and the adsorbed hydrogen is desorbed at 50°C or higher.

The obtained powder of the magnetic refrigeration material was subjected to Cu electroplating under conditions shown in Table 1. Cu electroplating was applied using an electroplating apparatus for small scale production (inclined barrel ultrafiltration set, manufactured by YAMAMOTO-MS Co., Ltd.). As the inclined barrel, a hole-free barrel having no aperture was used. The plating bath contained copper pyrophosphate (concentration: 84.6 g/L), potassium pyrophosphate (concentration: 305.8 g/L), and potassium citrate (concentration: 52.3 g/L), and had a P ratio (P₂O₇⁴⁻/Cu weight ratio) of 6.9 and a pH of 9.6, and the agitation was air agitation.

### [Table 1]

**Table 1**

| | Particle size of powder (µm) | Plating liquid temperature (°C) | Voltage (V) | Plating time (minute) | Plating liquid |
|---|---|---|---|---|---|
| Example 1 | 150-500 | 20 | 10 | 60 | Copper pyrophosphate |
| Comparative Example 1 | less than 150 | 20 | 10 | 60 | Copper pyrophosphate |
| Comparative Example 2 | more than 500 | 20 | 10 | 60 | Copper pyrophosphate |
| Comparative Example 3 | 150-500 | 50 | 10 | 60 | Copper pyrophosphate |

A powder of a magnetic refrigeration material subjected to Cu electroplating was observed with a microscope. 0.1 g of each powder was scattered on a filter paper wetted with pure water and was allowed to stand for 24 hours, and then, the rusting state was observed. The results are shown in Table 2. The change in weight between before and after the Cu electroplating is shown together.

### [Table 2]

**Table 2**

| | Particle surface state | Rusting state | Change in weight after plating |
|---|---|---|---|
| Example 1 | Good with gloss | No rusting | Increase |
| Comparative Example 1 | Good with gloss | No rusting | Decrease |
| Comparative Example 2 | A lot of cracks present | A lot of rusting portions generated from cracks | Increase |
| Comparative Example 3 | Unplated portion without gloss present | A lot of rusting portions generated | Decrease |

Example 1 gave a powder of a magnetic refrigeration material that was plated well. On the other hand, in Comparative Example 1, the appearance of the plating film looked good, but the weight decreased between before and after plating, and thus, it was found that components of the magnetic refrigeration material were eluted in the plating liquid over the plated amount. In Comparative Example 2, a lot of rusting portions were generated from cracks on the particle surface, and when this is used as a magnetic refrigeration material, there arises a problem in terms of corrosion resistance. In Comparative Example 3, a lot of plating defects were seen, and elution of components of the magnetic refrigeration material into the plating liquid was also seen.

ΔS was measured in Example 1 and Comparative Examples 1 to 3. Then, Example 1 showed a decrease corresponding to the plating volume, whereas Comparative Examples 1 to 3 showed a decrease more than the degree corresponding to the plating volume, indicating significant deterioration in characteristics.

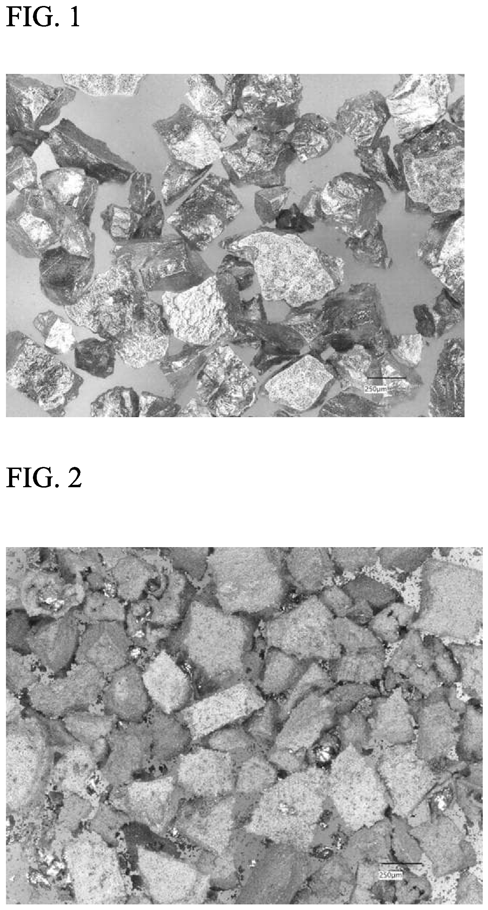

Figs. 1 and 2 respectively show images of magnetic refrigeration material powders subjected to Cu electroplating obtained in Example 1 and Comparative Example 3. In Example 1, unplated particles and deposit missing are not seen and it can be seen that a good plating state with gloss is obtained. On the other hand, in Comparative Example 3, the surface was rough without gloss and unplated particles and deposit missing were seen.

## Claims

1. A method for producing a magnetic refrigeration material, the method comprising subjecting a powder of a magnetic refrigeration material containing a powder having a particle size of 150 µm or more and 500 µm or less to Cu electroplating in a plating liquid having a liquid temperature of 30°C or lower.

2. The method for producing a magnetic refrigeration material according to claim 1, wherein the magnetic refrigeration material is constituted of a compound represented by a general formula: La(Fe₁₋ₓSiₓ)₁₃H_{z} (0.05≤x≤0.2, 0.3≤z≤3).

3. The method for producing a magnetic refrigeration material according to claim 1 or 2, wherein the plating liquid is a basic plating liquid.

4. The method for producing a magnetic refrigeration material according to claim 3, wherein the plating liquid is a copper pyrophosphate plating liquid.

5. The method for producing a magnetic refrigeration material according to claim 1 or 2, wherein an inclined barrel is immersed in the plating liquid and the powder of the magnetic refrigeration material is subjected to Cu electroplating in the inclined barrel.

6. The method for producing a magnetic refrigeration material according to claim 5, wherein the inclined barrel is a hole-free barrel having no aperture.

7. The method for producing a magnetic refrigeration material according to claim 1 or 2, wherein the powder of the magnetic refrigeration material is subjected to Cu electroplating together with media.
